# EUROPÄISCHE PATENTSCHRIFT

(11) **EP 0 800 853 B1**
(45) Veröffentlichungstag und Bekanntmachung des Hinweises auf die Patenterteilung: **26.07.2000**
(21) Anmeldenummer: 97103701.5
(22) Anmeldetag: 06.03.1997
(51) Int. Cl.: B01D 53/32

(54) **Verfahren und Elektrolysezelle zur Reinigung von Gasen**
Process and electrolytic cell for purifying gases
Procédé et cellule d'électrolyse pour purifier des gaz

(30) Priorität: 09.04.1996 DE 19614018
(43) Veröffentlichungstag der Anmeldung: 15.10.1997
(73) Patentinhaber: Degussa-Hüls Aktiengesellschaft, 60287 Frankfurt am Main (DE)
(72) Erfinder: Engel, Dieter, Dr., 79618 Rheinfelden (DE); Lehmann, Thomas, Dr., 63505 Langenselbold (DE); Troll, Harald, Dr., 63755 Alzenau (DE)

(56) Entgegenhaltungen:
- DE-A- 2 654 974
- DE-A- 2 901 577
- US-A- 4 772 366

## Beschreibung

Die Erfindung richtet sich auf eine Elektrolysezelle zur elektrolytischen Entfernung einer elektrochemisch umsetzbaren Verunreinigung aus Gasen sowie auf ein Verfahren zur Reinigung von Gasen unter Verwendung dieser Elektrolysezelle.

Gasförmige Schadstoffe oder Verunreinigungen in Gasen, wie zum Beispiel Cl₂, SO₂, NOₓ und Mercaptane, können durch eine naßchemische Wäsche mit einer Waschlösung entfernt werden. Für eine derartige Reinigung werden Absorptionsapparate, wie beispielsweise Füllkörperkolonnen, eingesetzt. Um eine gute Reinigungswirkung zu erzielen, muß die absorbierte Gaskomponente schnell umgesetzt werden. Nachteilig ist das Erfordernis, geeignete Chemikalien einsetzen zu müssen. Zudem wird durch das in der Waschlösung gebildete Reaktionsprodukt aus einem Abgasproblem vielfach ein Abwasserproblem.

Bekannt sind auch Verfahren zur elektrochemischen Abgasreinigung. Bei den sogenannten "outer-cell"-Verfahren wird die abzureichernde Gaskomponente eines Abgases zunächst in einer Absorptionskolonne in einer Waschlösung absorbiert; anschließend wird die Schadkomponente enthaltende Waschlösung in einer nachgeschalteten Elektrolysezelle kathodisch reduziert oder anodisch oxidiert. Diese Anordnung erfordert zwei Apparate, nämlich einen solchen zur Absorption und einen solchen zur Elektrolyse. Vorteilhafter sind die sogenannten "inner-cell"-Verfahren, wobei Absorption und elektrochemische Umsetzung in einem Reaktor, nämlich einer Elektrolysezelle, erfolgen, und weil durch elektrochemische Umsetzung die Schadstoffkonzentration stets niedrig gehalten wird. Bei den sogenannten "indirekten" Elektrolyseprozessen wird das bei einer naßchemischen Abgasbehandlung eingesetzte Oxidations- oder Reduktionsmittel durch Elektrolyse der gebrauchten Waschlösung regeneriert.

Ein "inner-cell"-Verfahren, das sich zur oxidativen oder reduktiven elektrolytischen Abgasreinigung eignet, lehren G. Kreysa et al. in Ger. Chem. Eng. 6 (1983) 325-336: Das zu reinigende Gas wird in einer als Festbettelektrode ausgebildeten Absorptionskolonne mit einer elektrolytisch leitenden Waschflüssigkeit in Kontakt gebracht. Die Absorptionskolonne enthält eine Schüttung aus leitfähigen Füllkörpern. Das zu reinigende Gas und die Waschflüssigkeit können im Gleichstrom oder im Gegenstrom durch die Kolonne geführt werden. In beiden Fällen soll ein stabiles Zweiphasengemisch (Gas/Flüssigkeit) durch die Kolonne strömen. Die Kolonne soll stets geflutet sein, und ein Abreißen der Flüssigkeitsströmung soll vermieden werden. Kreysa et al. zeigen, daß unter den angegebenen Bedingungen ein 5000 ppm Chlor enthaltendes Abgas unter Verwendung einer K₂SO₄-Katholytlösung und einem Strom von 15 A auf 50 ppm Chlor abgereichert werden kann. Auch aus der DE-A-29 01 577 folgen das zuvor gewürdigte Verfahren sowie verschiedene Ausführungsformen hierfür geeigneter Elektrolysezellen. Eine solche Zelle weist durch ein Diaphragma getrennte Elektrodenräume mit den zugeordneten Elektroden auf, wobei mindestens eine Elektrode als Festbettelektrode ausgebildet ist. Es können auch mehrere Anoden und Kathoden filterpressenartig zusammengefaßt sein. Innerhalb einer größeren Festbettelektrode können auch mehrere Gegenelektroden mit Gegenelektrodenräumen und Diaphragmen angeordnet sein.

Nachteilig an dem Verfahren von Kreysa et al. ist der hohe Restgehalt an Verunreinigungen im gereinigten Gas. Im Falle von Chlor liegt der Restgehalt etwa eine Zehnerpotenz oberhalb des beispielsweise in Deutschland zulässigen Grenzwerts von 5 ppm.

Gemäß der noch nicht veröffentlichten DE-A-195 31 707 (veröffentlicht am 6.3.97) lassen sich auf der Basis des zuvor gewürdigten Verfahrens von Kreysa bessere Reinigungsgrade erzielen, indem die Festbettelektrode als Rieselbettreaktor betrieben wird. Diese Fahrweise führt zu einem geringeren technischen Aufwand als jene des vorbekannten Verfahrens mit geflutetem Reaktor und zu einem wesentlich geringeren Restgehalt an Verunreinigungen.

Aus der US-A-4 772 366 und der DE-A-2 654 974 ist es bekannt, in Elektrolysezellen zur Abgasreinigung Gasdiffusionselektroden zu verwenden.

Ein Nachteil des vorbekannten sowie des in der DE-A-195 31 707.6 beschriebenen Verfahrens H besteht darin, daß die eine Elektrolysezelle umfassende Vorrichtung zwei Flüssigkeitskreisläufe, nämlich einen Katholyt- und einen Anolytkreislauf benötigt, wodurch die Vorrichtung kompliziert und störanfällig wird. Aufgabe der vorliegenden Erfindung ist demgemäß, ein weiteres Verfahren aufzuzeigen, das unter Verwendung einer einfacheren Elektrolysezelle die elektrochemische Reinigung von Gasen erlaubt.

Gefunden wurde eine Elektrolysezelle zur elektrolytischen Entfernung einer elektrochemisch umsetzbaren Verunreinigung aus Gasen, umfassend eine Festbettelektrode (10) und eine mittels eines Separators (4) davon getrennte Gegenelektrode (2) sowie auf der Seite der Festbettelektrode Vorrichtungen zur Zufuhr (17) und Verteilung (15) eines flüssigen Elektrolyts auf dem Festbett, zur Sammlung (14) und zum Abfluß des Elektrolyts (18) sowie zum Einlaß und Auslaß des zu reinigenden Gases (19 und 20) wobei die Gegenelektrode als Gasdiffusionselektrode ausgebildet ist und auf der der Festbettelektrode abgewandten Seite der Gegenelektrode ein Raum (6) mit Vorrichtungen zum Zu- und Abführen (7 und 8) eines Gases angeordnet ist.

Weiter wurde ein Verfahren zur elektrolytischen Entfernung einer elektrochemisch umsetzbaren Verunreinigung aus Gasen unter Verwendung einer oben beschriebenen Elektrolysezelle gefunden, wobei das zu reinigende Gas und ein flüssiger Elektrolyt im Gleich- oder Gegenstrom über eine Festbettelektrode der Elektrolysezelle geführt werden, wobei die Verunreinigung bei einer wirksamen Zellspannung umgesetzt wird, wobei die Festbettelektrode als Rieselbettreaktor betrieben wird und wobei bei kathodischer Schaltung der Festbettelektrode der Gasdiffusionselektrode ein Gas mit oxidierbaren und bei anodischer Schaltung mit reduzierbaren Bestandteilen zugeführt wird.

Die Unteransprüche richten sich auf bevorzugte Ausführungsformen der Elektrolysezelle sowie des unter ihrer Verwendung durchzuführenden Verfahrens.

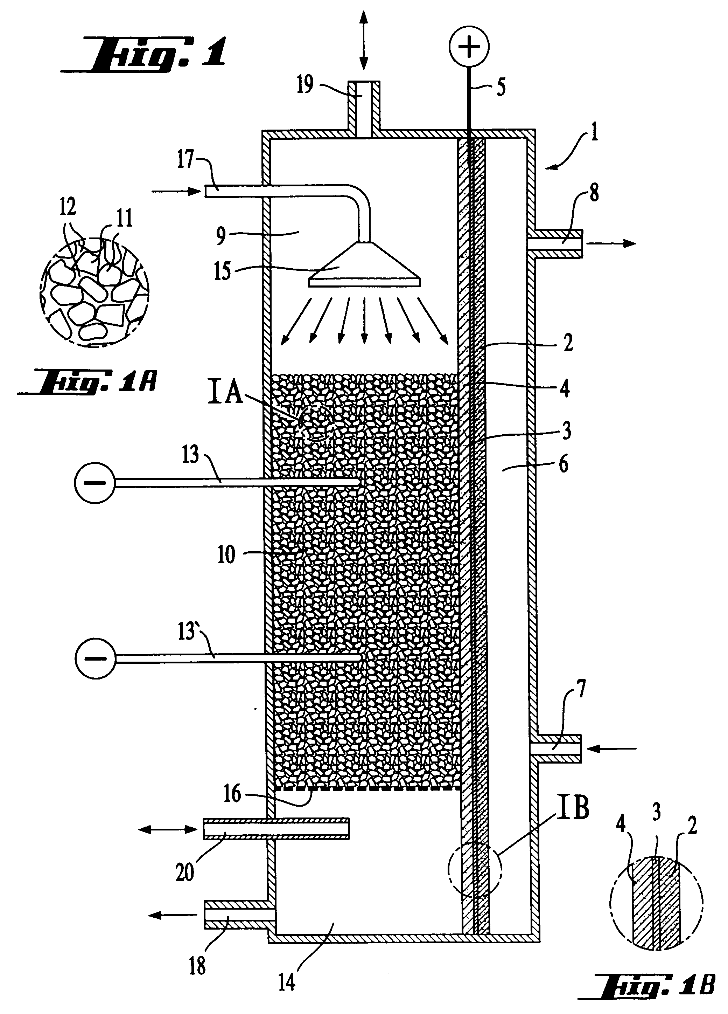

Die erfindungsgemäße Elektrolysezelle ist nicht auf die kathodische, also reduzierende Umsetzung, wie sie in einer Zelle gemäß Figur 1 durchgeführt werden kann, beschränkt. Bei einer anodischen, also oxidativen Umsetzung von Verunreinigungen im zu reinigenden Gas wird das Festbett anodisch geschaltet und mit einem Anolyt berieselt; die Gasdiffusionselektrode wird dann als Kathode geschaltet und mit einem reduzierbaren Gas, vorzugsweise Sauerstoff, beaufschlagt.

Unter Verwendung der erfindungsgemäßen Elektrolysezelle im erfindungsgemäßen Verfahren können solche Gase gereinigt werden, welche unter den elektrolytischen Bedingungen umsetzbare Verunreinigungen enthalten. Bei der Umsetzung handelt es sich um eine Reduktion oder Oxidation, wobei die Reaktionsprodukte gegebenenfalls mit Bestandteilen des Elektrolyts weiterreagieren können. Reduzierbare Verunreinigungen, wie Halogene und insbesondere Chlor, lassen sich nahezu quantitativ aus dem Gas abtrennen, indem diese über ein als Festbettkathode ausgebildetes Festbett geleitet werden und ein wäßriger Katholyt, bei Halogenen als Verunreinigung eine wäßrige Halogenwasserstoffsäure, über dieses Festbett rieselt; an der Anode wird Wasserstoffgas oxidiert. Bei anodischer Schaltung des Festbetts und Zufuhr eines reduzierbaren Gases, vorzugsweise Sauerstoff, zur Gasdiffusionskathode sowie Verwendung eines wäßrigen Anolyts können oxidierbare Schadgase, beispielsweise Schwefelwasserstoff, Alkylmercaptane oder Stickoxide enthaltende Gase, abgereinigt werden, wobei die Oxidationsprodukte, also die Schwefelsäure, Alkansulfonsäure beziehungsweise Salpetersäure, im Anolyt gelöst werden.

Figur 1 zeigt in schematischer Form einen Längsschnitt durch eine bevorzugte Ausführungsform der erfindungsgemäßen Elektrolysezelle mit kathodischer Schaltung des Festbetts - die Bedeutung der numerierten Teile sind der Bezugszeichenliste zu entnehmen. Die Elektrolysezelle (1) umfaßt eine Gasdiffusionsanode (2 mit 3), eine als Festbett (10) ausgebildete Kathode und einen zwischen der Anode und Kathode angeordneten Separator (4). Die Gasdiffusionselektrode umfaßt einen Anodenträger (2) aus einem für Wasserstoff durchlässigen porösen leitfähigen Material. Vorzugsweise handelt es sich um ein Kohlenstoffmaterial. Zweckmäßigerweise ist der Anodenträger flächig ausgebildet, worunter insbesondere Folien oder Platten, die auch rohrförmig geformt sein können, verstanden werden. Auf der der Kathode zugewandten Seite des Anodenträgers befindet sich, sofern der Anodenträger nicht selbst die Oxidation von Wasserstoff katalysiert, eine Anodenbeschichtung (3). Diese Beschichtung wirkt als Katalysator für die Oxidation von Wasserstoff zu Protonen, die durch den Separator in den Kathodenraum gelangen. Katalytisch gut wirksame Materialien für die Beschichtung sind Edelmetalle und Edelmetallegierungen; bevorzugt wird Platin. Die Beschichtung läßt sich beispielsweise durch Aufpinseln einer Suspension von feinstverteiltem Edelmetall auf den Anodenträger aufbringen; die Beschichtung ist für Wasserstoff permeabel. Die Kontaktierung der Anode erfolgt über eine Anodenkontaktierung (5), welche bei einer bevorzugten Ausführungsform der Anode mit der Beschichtung (3) der Anode verbunden ist. Auf der von der Kathode abgewandten Seite der Anode befindet sich der Anodenraum (6) mit Vorrichtungen zum Zuführen (7) und, sofern Wasserstoff durch den Anodenraum strömt, zum Auslassen (8) von Wasserstoff; Vorrichtungen zum Aufrechterhalten eines Wasserstoffdrucks im Anodenraum sind in der Figur 1 nicht gezeigt.

Eine andere zweckmäßige Kontaktierung für die Gasdiffusionselektrode erfolgt über mehrere, mindestens 2, vorzugsweise 2 bis 10, auf der Elektrode angeordnete Kontaktierstreifen aus einem Edelmetall, insbesondere Platin, oder einem Ventilmetall, insbesondere Tantal. Eine weitere Kontaktiermöglichkeit besteht darin, den zugeordneten Elektrodenraum so mit Graphitkugeln zu füllen, daß die Elektrode gleichmäßig über die Fläche verteilt kontaktiert wird; der elektrische Anschluß erfolgt dann mittels einer Anodenendplatte, welche mit den Graphitkugeln in Verbindung steht.

Bei dem zwischen der Anode und Kathode angeordneten Separator (4) kann es sich um eine ionenpermeable Membran oder um ein mechanisches Trennsystem, etwa ein mikroporöses Diaphragma aus einem isolierenden aber porösen Material aus beispielsweise Kunststoff oder Keramik handeln. Bei kathodischer Schaltung des Festbetts wird besonders bevorzugt eine Kationenaustauschermembran, etwa eine solche auf der Basis aliphatischer perfluorierter Polyethersulfonsäuren (Nafion®-Membran) verwendet. Bei anodischer Schaltung des Festbetts wird in entsprechender Weise ein mikroporöses Trennsystem oder eine Anionenaustauschermembran verwendet. Mittels eines Kunststoffgitters auf der Membran kann diese vor mechanischer Beschädigung durch Partikel der Festbettelektrode geschützt werden.

Weitere Ausführungsformen der Zelle und des Verfahrens werden nachstehend am Beispiel einer Zelle mit kathodisch geschaltetem Festbett dargestellt; die daraus resultierende technische Lehre läßt sich aber in entsprechender Weise auch auf Zellen mit anodischer Schaltung des Festbetts übertragen. Der Kathodenraum ist im wesentlichen durch eine Schüttung von Kathodenpartikeln, dies sind Füllkörper aus einem korrosionsbeständigen leitfähigen Material, ausgefüllt; diese Schüttung bildet die Festbettkathode (10) (das Bezugszeichen (10) steht damit sowohl für die Kathode als auch den eigentlichen Kathodenraum). Zwischen den Kathodenpartikeln (11) der Festbettkathode bilden sich Zwischenräume (12) aus, durch welche das zu reinigende Gas strömen und der flüssige Katholyt durchrieseln kann. Die Auswahl des Materials für die Kathodenpartikel richtet sich nach der Korrosionsneigung der im Gas enthaltenen Verunreinigungen sowie deren im Katholyt gelösten reduzierten Verbindungen. Bei der Reinigung von halogenhaltigen Gasen eignen sich Partikel aus Graphit besonders gut; im Prinzip eignet sich auch Tantal, jedoch sind solche Partikel teurer. Die Füllkörper können kugelförmig sein oder eine Form aufweisen, wie sie bei Füllkörpern für die Absorptionstechnik üblich ist - etwa Stäbchen, Sattel, Ringe. Angestrebt wird eine möglichst hohe volumenspezifische Oberfläche der Füllkörper bei möglichst geringem Druckverlust im Festbett. Anstelle von Partikeln aus Graphit eignen sich sowohl bei kathodischer als auch anodischer Schaltung der Festbettelektrode Formkörper, etwa Strangpresslinge, aus Aktivkohle.

Die Kontaktierung der Festbettkathode erfolgt mittels eines oder mehrerer in das Festbett reichender Kontaktierstäbe (13 und 13') oder mittels eines oder mehrerer im Festbett angeordneter Kontaktiergitter oder -platten aus einem korrosionsbeständigen, gut leitfähigen Material, etwa einem Ventilmetall, insbesondere Tantal.

Unterhalb der auf einer gelochten Trägerplatte (16) angeordneten Festbettkathode befinden sich zweckmäßigerweise ein Katholytsammelraum (14) zur Aufnahme des durch die Festbettkathode rieselnden Katholyts sowie eine Vorrichtung zu dessen Abfluß (18). Der Katholyt wird über die Leitung (17) dem Katholytverteiler (15) zugeführt und von dort gleichmäßig über die Oberfläche des Festbetts verteilt. Eine gleichmäßige Katholytaufgabe ist notwendig, um eine Kanalbildung und Flüssigkeitsstau im Festbett zu vermeiden.

Das zu reinigende Gas wird bei Gegenstromführung von unten, bei Gleichstromführung von oben, dem Festbett zugeführt und auf dem jeweils gegenüberliegenden Ende abgeführt. Demgemäß sind an der Elektrolysezelle oberhalb und unterhalb der Festbettkathode Leitungen (19 und 20) zum Zuführen des zu reinigenden beziehungsweise Abführen des gereinigten Gases angeordnet. Zweckmäßigerweise mündet die eine Leitung (19) in einen Gassammelraum (9) und die andere Leitung (20) in den Katholytsammelraum (14).

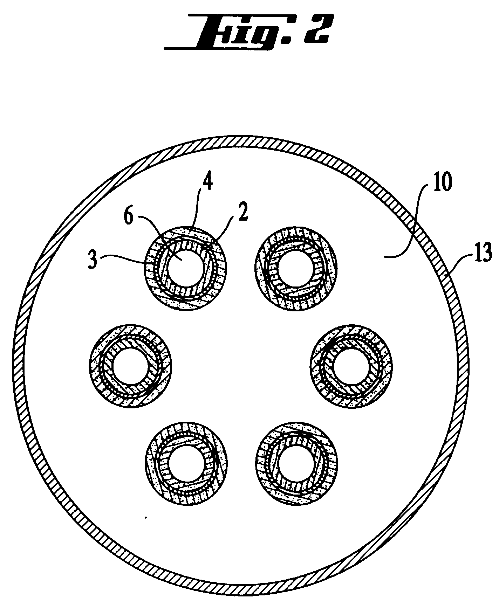

Außer der in Figur 1 dargestellten Ausführungsform können die Festbettkathode und Gasdiffusionsanode mit dem dazwischen liegenden Separator auch in anderer Weise angeordnet werden: Beispielsweise können mehrere erfindungsgemäße Elektrolysezellen in an sich bekannter Weise filterpressenartig zusammengeschaltet werden. Gemäß einer weiteren Ausführungsform können ein oder mehrere rohrförmig ausgebildete Gasdiffusionsanoden innerhalb einer eine Festbettkathode bildenden Schüttung aus Kathodenpartikeln angeordnet sein. Ein Querschnitt einer solchen Anordnung ist in Figur 2 dargestellt: Die Rohrwandung der Gasdiffusionsanode umfaßt von innen nach außen den Träger (2), die Anodenbeschichtung (3) sowie den Separator (4); der Rohrinnenraum entspricht dem Anodenraum (6); zur Kontaktierung der Festbettkathode (10) dient hier die Behälterwand (13). Das in Figur 2 dargestellte Prinzip läßt sich in analoger Weise auf Zellen mit anodischer Schaltung des Festbetts und einer Gasdiffusionskathode übertragen.

Zur Durchführung des erfindungsgemäßen Verfahrens unter Verwendung einer Zelle mit kathodisch geschalteter Festbettelektrode wird die Gasdiffusionsanode mit Wasserstoff beaufschlagt. Der H₂-Druck im Anodenraum wird derart einreguliert, daß es zu keinem H₂-Durchbruch in das Festbett der Kathode kommt. An der Grenzfläche von katalytisch wirksamer Oberfläche der Anode, Katholyt und Wasserstoffgas wird Wasserstoff oxidiert, wobei die Elektronen über die Kontaktierung abgeführt werden. Diese Oxidation läuft nahezu ohne Überspannung ab, was gegenüber bisherigen Verfahren zu einem deutlich niedrigeren Energieverbrauch führt. Die bei der Oxidation gebildeten Protonen treten durch die Kationaustauschermembran, sofern eine solche als Separator anwesend ist.

Es ist ein erfindungswesentliches Merkmal, daß der die reduzierte beziehungsweise oxidierte Verunreinigung des Gases absorbierende Elektrolyt, bei der Entfernung von beispielsweise Chlor aus Gasen üblicherweise verdünnte Salzsäure, bei der Entfernung von zum Beispiel Schwefelwasserstoff eine verdünnte Schwefelsäurelösung, über die Festbettelektrode rieselt. Die Festbettelektrode wird also in Form eines Rieselbetts (trickle bed) betrieben. Während Kreysa et al. (Ger. Chem. Eng. 6 (1983) 325-336, insbesondere Seite 329) ausdrücklich lehren, während der Elektrolyse innerhalb der Festbettelektrode eine stabile Zweiphasenströmung aufrecht und damit die Festbettelektrode in geflutetem Zustand zu halten, wird erfindungsgemäß die Festbettelektrode stets im nichtgefluteten Zustand betrieben. Der Elektrolyt bildet auf den Partikeln der Festbettelektrode einen Flüssigkeitsfilm mit einer großen Austauschfläche. Aufgrund dieser vergrößerten Austauschfläche wird der Stoffaustausch zwischen der Flüssigkeit und den Verunreinigungen des Gases verbessert und dadurch ein wesentlich höherer Reinigungsgrad des Gases erzielt. Durch den Betrieb der Festbettelektrode als Rieselbett beträgt der Druckverlust im Rieselbett nur einen Bruchteil desjenigen der beim Betrieb einer gefluteten Festbettelektrode überwunden werden muß.

Das zu reinigende Gas und der die Verunreinigungen absorbierende Elektrolyt können entweder im Gleichstrom oder im Gegenstrom über die Festbettelektrode geleitet werden. In jedem Fall rieselt aber der Elektrolyt von oben nach unten durch die Schüttung aus Partikeln der Festbettelektrode. Besonders bevorzugt werden Gas und Elektrolyt im Gegenstrom geführt. Hierbei werden die Berieselungsdichte (Menge Katholyt pro Querschnittsfläche und Stunde) und die entgegenströmende Menge Gas derart aufeinander abgestimmt, daß es zu keiner Flutung kommt.

Zum Betrieb der Elektrolyse wird ein Strom angelegt und die Stromstärke erhöht, bis eine wirksame Spannung erreicht ist. Üblicherweise wird bei einem Strom im Bereich von 3 bis 20 A, insbesondere 3 bis 10 A, und einer Spannung im Bereich von 2 bis 6 V elektrolysiert. Die wirksame Stromdichte und das Potential nehmen mit zunehmender Bettiefe ab. Der Fachmann wird demgemäß die optimale Bettiefe durch orientierende Versuche ermitteln.

Vorteile des erfindungsgemäßen Verfahrens sind die einfachere Bauart der Zelle durch den Wegfall eines Kreislaufs für einen zweiten flüssigen Elektrolyten, der gegenüber dem vorbekannten Verfahren wesentlich höhere Reinigungsgrad, die einfache Handhabung der als Rieselbett betriebenen Festbettelektrode und insbesondere der geringere Energiebedarf, bedingt durch die minimale Überspannung sowie den geringen Druckverlust. Ein weiterer Vorteil ist, daß das Verhältnis des Volumenstroms des zu reinigenden Gases zu der über das Festbett rieselnden, als Elektrolyt und Absorptionsmittel wirksamen Waschlösung gegenüber dem vorbekannten Verfahren gesteigert und damit die Raum-Zeit-Ausbeute erhöht werden konnte.

Anhand der Beispiele wird die Erfindung weiter erläutert.

### Beispiel 1

Mit der in Figur 1 gezeigten Zelle mit einer Gasdiffusionsanode aus einem Graphitträger mit einer Pt-Beschichtung wurden Abreicherungsversuche mit einem 0,1 Vol.-% C1₂ enthaltenden Abgas durchgeführt. Zur Vermeidung eines Kurzschlusses wurde zwischen die Gasdiffusionselektrode und dem Graphitbett ein mikroporöses Diaphragma angeordnet.

Um eine Abreicherung von ca. 100 % bei maximaler Gasdichte zu erzielen, muß auf eine gute Kontaktierung der Gasdiffusionselektrode geachtet werden. Günstig auf die Zellspannung und auf den erzielbaren Gasdurchsatz wirkt sich hierfür eine gleichmäßige und ausreichend große Anzahl von elektrischen Kontakten an der Gasdiffusionselektrode aus. Das beste Ergebnis wird erhalten, wenn man den Anodenraum mit Graphitkugeln füllt und so unter Verwendung einer Anodenendplatte einen optimalen Kontakt zur Gasdiffusionsanode herstellt (siehe Tabelle 1).

Der Druckunterschied zwischen Anoden- und Kathodenraum darf mit einer unbeschichteten Gasdiffusionselektrode nicht mehr als 0,5 mbar betragen.

**Tabelle 1**

| Versuchsergebnisse mit unterschiedlicher Kontaktierung der Gasdiffusionselektrode | | | |
|---|---|---|---|
| Kontakt | 2 Pt-Streifen | 8 Ta-Streifen | Graphitkugeln |
| Gasdichte (m³/(m²·h)) | 37 | 75 | 123 |
| Zellspannung (V) | 3,3 | 2,9 | 2,2 |
| Abreicherungsgrad von Chlor | 100 | 100 | 99,96 |

### Beispiel 2

In die in der Fig. 1 gezeigte Zelle wird eine mit Nafion® als Kationenaustauschermembran beschichtete Gasdiffusionselektrode eingesetzt. Die Gasdiffusionselektrode wurde durch Verpressen von platiniertem Ruß und Polytetrafluorethylen erzeugt. Durch die 40-50 µm dicke Beschichtung mit der nur gering gasdurchlässigen Nafion®-Membran ist zwischen Anoden- und Kathodenraum eine größere Druckdifferenz als 0,5 mbar möglich, wodurch die Verfahrensführung weiter vereinfacht wird.

**Tabelle 2**

| Versuchsergebnisse mit Nafion-beschichteter Gasdiffusionselektrode | |
|---|---|
| Gasdichte (m³/(m²·h)) | 75 |
| Zellspannung (V) | 2,7-3,3 |
| Abreicherungsgrad von Chlor (%) | >99,95 |

### Bezugszeichen

- 1: Elektrolysezelle
- 2: Poröser leitfähiger Anodenträger
- 3: Anodenbeschichtung
- 4: Separator
- 5: Anodenkontaktierung
- 6: Anodenraum
- 7: Wasserstoffzufuhr
- 8: Wasserstoffauslaß
- 9: Gassammelraum
- 10: Festbettkathode (Kathodenraum)
- 11: Kathodenpartikel
- 12: Zwischenraum zwischen Kathodenpartikeln
- 13, 13': Kontaktierstäbe für Kathode
- 14: Katholytsammelraum
- 15: Katholytverteiler
- 16: Festbett-Trägerplatte
- 17: Katholytzufuhr
- 18: Katholytabfluß
- 19: Gaseinlaß (Gleichstrom) bzw. Gasauslaß (Gegenstrom)
- 20: Gasauslaß (Gleichstrom) bzw. Gaseinlaß (Gegenstrom)

## Patentansprüche

1. Elektrolysezelle zur elektrolytischen Entfernung einer elektrochemisch umsetzbaren Verunreinigung aus Gasen, umfassend eine Festbettelektrode (10) und eine mittels eines Separators (4) davon getrennte Gegenelektrode (2) sowie auf der Seite der Festbettelektrode Vorrichtungen zur Zufuhr (17) und Verteilung (15) eines flüssigen Elektrolyts auf dem Festbett, zur Sammlung (14) und zum Abfluß des Elektrolyts (18) sowie zum Einlaß und Auslaß des zu reinigenden Gases (19 und 20) dadurch gekennzeichnet, daß die Gegenelektrode als Gasdiffusionselektrode ausgebildet ist und daß auf der der Festbettelektrode abgewandten Seite der Gegenelektrode ein Raum (6) mit Vorrichtungen zum Zu- und Abführen (7 und 8) eines Gases angeordnet ist.

2. Elektrolysezelle nach Anspruch 1,
dadurch gekennzeichnet,
daß die Gasdiffusionselektrode einen schichtförmigen Anoden- oder Kathodenträger (2) aus einem porösen leitfähigen Material mit einer zur katalytischen Oxidation von Wasserstoff oder zur Reduktion von Sauerstoff wirksamen Beschichtung (3) auf der der Festbettelektrode zugewandten Seite umfaßt.

3. Elektrolysezelle nach Anspruch 1 oder 2,
dadurch gekennzeichnet,
daß der Elektrodenträger aus Kohlenstoff und die Beschichtung aus Platin besteht.

4. Elektrolysezelle nach einem der Ansprüche 1 bis 3,
dadurch gekennzeichnet,
daß der Separator als ionenpermeable Membran ausgebildet ist.

5. Elektrolysezelle nach einem der Ansprüche 1 bis 4,
dadurch gekennzeichnet,
daß die Festbettelektrode im wesentlichen aus Graphitpartikeln oder Formkörpern aus Aktivkohle besteht.

6. Elektrolysezelle nach einem der Ansprüche 1 bis 5,
dadurch gekennzeichnet,
daß die Gasdiffusionselektrode zwecks Kontaktierung mit mindestens zwei Metallstreifen aus einem Edelmetall oder Ventilmetall oder mit im zugeordneten Elektrodenraum angeordneten Graphitkugeln, die mittels einer Anodenplatte kontaktiert werden, in Verbindung steht.

7. Verfahren zur elektrolytischen Entfernung einer elektrochemisch umsetzbaren Verunreinigung aus Gasen mit einer Elektrolysezelle gemäß Anspruch 1, wobei das zu reinigende Gas und ein flüssiger Elektrolyt im Gleich- oder Gegenstrom über eine Festbettelektrode der Elektrolysezelle geführt werden, wobei die Verunreinigung bei einer wirksamen Zellspannung umgesetzt wird,
wobei die Festbettelektrode als Rieselbettreaktor betrieben wird und wobei bei kathodischer Schaltung der Festbettelektrode der Gasdiffusionselektrode ein oxidierbares und bei anodischer Schaltung ein reduzierbares Gas zugeführt wird.

8. Verfahren nach Anspruch 7,
dadurch gekennzeichnet,
daß man eine Elektrolysezelle gemäß einem der Ansprüche 2 bis 6 verwendet.

9. Verfahren nach Anspruch 7 oder 8,
dadurch gekennzeichnet,
daß man bei der reduzierenden Reinigung eines chlorhaltigen Gases eine als Anode geschaltete Gasdiffusionselektrode mit einer zur katalytischen Oxidation von Wasserstoff wirksamen Oberfläche und als Katholyt eine verdünnte wäßrige Salzsäurelösung verwendet.

## Claims

1. An electrolysis cell for the electrolytic removal of an electrochemically convertible contaminant from gases, consisting of a fixed bed electrode (10) and a counter electrode (2) separated therefrom by a separator (4) and also on the side of the fixed bed electrode devices for supplying (17) and distributing (15) a liquid electrolyte on the fixed bed, for collecting (14) and for discharging the electrolyte (18) and for introducing and removing the gas to be purified (19 and 20), characterised in that the counter electrode is designed as a gas diffusion electrode and that on the side of the counter electrode which is turned away from the fixed bed electrode there is a chamber (6) with devices for the supply and removal (7 and 8) of a gas.

2. An electrolysis cell according to Claim 1,
characterised in that
the gas diffusion electrode consists of a laminated anode or cathode support (2) made of a porous conductive material with a catalytically active coating (3) for the oxidation of hydrogen or for the reduction of oxygen on the face which is turned towards the fixed bed electrode.

3. An electrolysis cell according to Claim 1 or 2,
characterised in that
the electrode support consists of carbon and the coating consists of platinum.

4. An electrolysis cell according to one of Claims 1 to 3,
characterised in that
the separator is designed as an ion-permeable membrane.

5. An electrolysis cell according to one of Claims 1 to 4,
characterised in that
the fixed bed electrode substantially consists of graphite particles or moulded items made from active carbon.

6. An electrolysis cell according to one of Claims 1 to 5,
characterised in that
the gas diffusion electrode, for contact purposes, is connected to at least two metal strips made from a noble metal or valve metal or with graphite beads located in the assigned electrode chamber which are contacted by means of an anode plate.

7. A process for the electrolytic removal of an electrochemically convertible contaminant from gases using an electrolysis cell in accordance with Claim 1, wherein the gas to be purified and a liquid electrolyte are passed in countercurrent or cocurrent over a fixed bed electrode in the electrolysis cell, wherein the contaminant is converted at an active cell voltage, wherein the fixed bed electrode is operated as a trickle bed reactor and wherein when the fixed bed electrode acts as the cathode an oxidisable gas is supplied to the gas diffusion electrode and when the fixed bed electrode acts as the anode a reducible gas is supplied to the gas diffusion electrode.

8. A process according to Claim 7
characterised in that
an electrolysis cell in accordance with one of Claims 2 to 6 is used.

9. A process according to Claim 7 or 8,
characterised in that
in the case of reducing purification of a chlorine-containing gas, a gas diffusion electrode with a catalytically active surface for the oxidation of hydrogen is used as the anode and a dilute aqueous solution of hydrochloric acid is used as the catholyte.

## Revendications

1. Cellule d'électrolyse pour l'élimination par électrolyse d'une contamination convertible par voie électrochimique à partir de gaz, comprenant une électrode à lit solide (10) et une contre-électrode (2) séparée de celle-ci au moyen d'un séparateur (4), ainsi que des dispositifs sur le côté de l'électrode à lit solide, pour l'amenée (17) et la distribution (15) d'un électrolyte liquide sur le lit solide, pour le recueil (14) et l'évacuation (18) de l'électrolyte ainsi que pour l'entrée et la sortie du gaz à purifier (19) et (20),
caractérisée en ce que
la contre électrode est sous forme d'électrode de diffusion de gaz, et sur le côté de la contre électrode opposé à l'électrode à lit solide, on dispose un espace (6) avec des dispositifs pour l'amenée et l'évacuation (7), (8) d'un gaz.

2. Cellule d'électrolyse selon la revendication 1,
caractérisée en ce que
l'électrode de diffusion de gaz comprend un support (2) d'anode ou de cathode sous forme stratifiée, en matériau conducteur poreux avec un revêtement (3) efficace pour l'oxydation catalytique de l'hydrogène ou pour la réduction de l'oxygène sur le côté tourné vers l'électrode à lit solide.

3. Cellule d'électrolyse selon la revendication 1 ou 2,
caractérisée en ce que
le support d'électrodes est formé de carbone et le recouvrement, de platine.

4. Cellule d'électrolyse selon l'une des revendications 1 à 3,
caractérisée en ce que
le séparateur est en forme de membrane perméable aux ions.

5. Cellule d'électrolyse selon l'une des revendications 1 à 4,
caractérisée en ce que
l'électrode à lit solide consiste essentiellement en des particules de graphite ou en des solides moulés à base de charbon actif.

6. Cellule d'électrolyse selon l'une des revendications 1 à 5,
caractérisée en ce que
l'électrode de diffusion de gaz se tient en contact aux fins de la mise en contact avec au moins deux rubans métalliques en métal noble ou en métal de valve, ou avec des valve billes de graphite disposées dans l'espace des électrodes adjointes, et mises en contact au moyen d'une plaque d'anode.

7. Procédé d'élimination par électrolyse d'une impureté convertible par voie électrochimique à partir de gaz avec une cellule d'électrolyse conformément à la revendication 1, dans lequel
- le gaz à épurer et un électrolyte liquide sont amenés en courant parallèle ou à contre-courant sur une électrode à lit solide de la cellule d'électrolyse,
- l'impureté est convertie à une tension de cellule efficace,
- l'électrode à lit solide est mise en fonctionnement comme réacteur à lit de ruissellement, et
- par connexion cathodique de l'électrode à lit solide, on amène à l'électrode de diffusion de gaz un gaz oxydable, et par connexion anodique, on amène un gaz réducteur.

8. Procédé selon la revendication 7,
caractérisé en ce qu'
on utilise une cellule d'électrolyse conformément à une des revendications 2 à 6.

9. Procédé selon la revendication 7 ou 8,
caractérisé en ce qu'
on utilise pour l'épuration réductrice d'un gaz qui contient du chlore, une électrode de diffusion de gaz connectée comme anode, avec des surfaces efficaces pour l'oxydation catalytique de l'hydrogène et comme catholyte une solution aqueuse diluée d'acide chlorhydrique.
